# EUROPEAN PATENT APPLICATION

(11) **EP 2 549 722 A1**
(43) Date of publication of application: **23.01.2013**
(21) Application number: 11174982.6
(22) Date of filing: 22.07.2011
(51) Int. Cl.: H04M 1/725, G06F 9/445

(54) **Connection status based application launch system**

(71) Applicant: Research In Motion Limited, Waterloo, ON N2L 3W8 (CA)
(72) Inventor: Bender, Michael John, Waterloo, Ontario N2L 3W8 (CA)
(74) Representative: Bryn-Jacobsen, Caelia

(57) **Abstract**

An electronic device may include a connection status determination processor, an application selection processor, an application launch input element, and one or more connection interfaces. In response to a trigger of the application launch input element, the connection status determination processor determines a status of the connection interfaces. The application selection processor selects and activates an application based on the status of the connection interfaces. For example, the application selection processor may activate a different application when the connection interfaces reflect a first active connection state than when the one or more connection interfaces reflect a second active connection state.

## Description

### BACKGROUND

### 1. Technical Field.

This application relates to electronic devices and, more particularly, to a connection status based application launch system for an electronic device.

### 2. Related Art.

Electronic devices may include an input element that allows a user to selectively launch software applications. As one example, a mobile phone may include a quick launch button or convenience key that is associated with an application chosen by the user. By allowing the user to choose the application that is associated with the quick launch button, the device provides quick and convenient access to the user's chosen application. For example, the user may access the chosen application with a single button press without needing to traverse through a series of menus displayed on the device to find the application.

Although quick launch buttons are convenient for the user, the number of quick launch buttons included on a device is limited. Some devices may only include one quick launch button. In an implementation with only one quick launch button, the user may be forced to select only one application that can be launched quickly. This can be problematic when the user desires quick access to different applications in different situations yet only has a limited number of quick launch buttons.

### BRIEF DESCRIPTION OF THE DRAWINGS

The system may be better understood with reference to the following drawings and description. The components in the figures are not necessarily to scale, emphasis instead being placed upon illustrating the principles of the disclosure. Moreover, in the figures, like reference numerals designate corresponding parts throughout the different views.

Figure 1 illustrates an electronic device with a connection status based application launch system.

Figure 2 illustrates an electronic device with an application launch input element and one or more connection interfaces.

Figure 3 illustrates a connection status based application launch system.

Figure 4 illustrates a connection status based application launch method.

Figure 5 is a first user interface for a connection status based application launch system.

Figure 6 is a second user interface for a connection status based application launch system.

Figure 7 is a third user interface for a connection status based application launch system.

Figure 8 is a fourth user interface for a connection status based application launch system.

Figure 9 is a fifth user interface for a connection status based application launch system.

Figure 10 is a sixth user interface for a connection status based application launch system.

Figure 11 is a seventh user interface for a connection status based application launch system.

### DETAILED DESCRIPTION

An electronic device is often loaded with several different software applications. The electronic device may also have an application launch input element, such as a quick launch button, that a user may customize to be associated with a specific application. When the user triggers the input element (e.g., presses or actuates the quick launch button), the electronic device activates the application that is associated with the input element. Some users desire quick access to a greater number of applications than allowed by the number of available application launch input elements on the device. Additionally, some applications require a fast activation in order to be useful. For example, some photography opportunities pass before the user can activate the camera application, especially if the camera application is not quickly accessible via a quick launch button. However, when a device has only one quick launch button (or a limited number of quick launch buttons), some users may prefer to have the quick launch button associated with an application that is used more often than the camera application, such as a messaging application or an Internet browser application.

To address these issues, more than one application may be associated with an application launch input element by distinguishing between different active connection states of the device. In one implementation, several applications may be associated with a single application launch input element by associating a first application with a connection state where the device has no active connections, a second application with a connection state where the device has an active Wi-Fi connection, a third application with a connection state where the device has an active Bluetooth connection, a fourth application with a connection state where the device has an active headphone connection, and a fifth application with a connection state where the device has an active Universal Serial Bus ("USB") connection. When the user triggers the input element (e.g., presses or actuates the quick launch button), the electronic device identifies the current active device connection and launches the application associated with that connection.

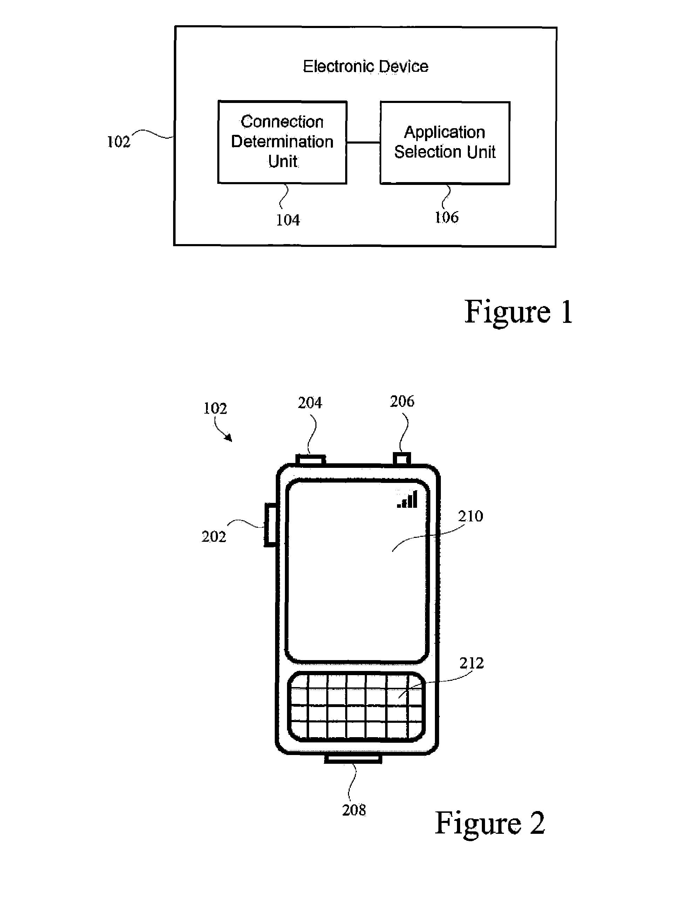

Figure 1 illustrates an electronic device 102 with a connection status based application launch system. The connection status based application launch system includes a connection status determination unit 104 in communication with an application selection unit 106. The connection status determination unit 104 may include a computer or signal processor that executes computer-readable instructions retained in a local or distributed memory to identify the status of one or more connection interfaces available for the electronic device 102. For example, the connection status determination unit 104 may determine, in response to a trigger of an application launch input element of the electronic device 102, whether a first connection type, a second connection type, or another connection type of the electronic device 102 is active or is the primary active connection when more than one connection type is active.

The application selection unit 106 may include a computer or signal processor that executes computer-readable instructions retained in a local or distributed memory to identify which available application should be launched in response to the user triggering the application launch input element. The application selection unit 106 may activate a different application when the connection status determination unit 104 determines that the one or more connection interfaces of the device reflect a first active connection state for the electronic device when the application launch input element is triggered than when the connection status determination unit 104 determines that the one or more connection interfaces reflect a second active connection state for the electronic device when the application launch input element is triggered. For example, the application selection unit 106 may activate a different application when a first connection type is active than when a second connection type is active. In one implementation, the processor of the connection status determination unit 104 may be the same processor that is used in the application selection unit 106. In another implementation, the processor of the connection status determination unit 104 may be different than the processor used in the application selection unit 106.

Figure 2 illustrates an electronic device 102 with an application launch input element 202 and one or more connection interfaces 204, 206, and 208. As shown in Figure 2, the electronic device 102 may also include a display device 210 and a user input device 212 (e.g., keypad, touch screen, etc.). The application launch input element 202 may be a "quick launch" button that a user may customize to be associated with one or more available applications. In one implementation, the application launch input element 202 is a physical button or key extending out from a housing of the electronic device 102. In another implementation, the application launch input element 202 is a virtual button visually depicted on the display device 210.

The connection interfaces 204, 206, and 208 may be physical equipment or software programs designed to communicate information from one system of an electronic device or program to another electronic device or program. As one example, the connection interface 204 may be a wireless connectivity interface, such as a Wi-Fi or Bluetooth interface that allows connection between the electronic device 102 and another electronic device. As another example, the connection interface 206 may be a headphone jack that connects an audio listening device with the electronic device 102. As yet another example, the connection interface 208 may be a wired physical connection port, such as a USB interface that allows connection between the electronic device 102 and another electronic device.

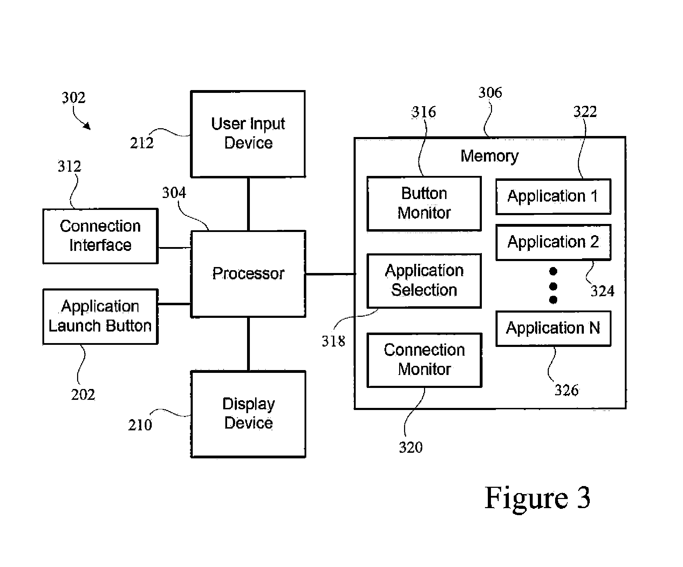

Figure 3 illustrates a connection status based application launch system 302. The system 302 includes a processor 304, a memory 306, a display device 210, a user input device 212, a connection interface 312, and an application launch button 202. The connection interface 312 may represent one of the connection interfaces 204, 204, and 208 of the electronic device 102 of Figure 2 or may represent a different type of connection interface. The memory 306 may store a button monitor program 316, an application selection program 318, a connection status determination program 320, and a plurality of applications 322, 324, and 326.

The display device 210 may render a graphical user interface that displays content to the user. For example, one or more of the applications 322, 324, and 326, when activated, may produce visual content that is displayed to the user on the display device 210. The user input device 212 (e.g., keypad, touch screen, etc.) allows the user to input requests or other information to the electronic device. The application launch button 202 may be a standalone physical button or key (e.g., a convenience key) extending out from a housing of the electronic device. Alternatively, the application launch button 202 may be part of the user input device 212 that includes other input elements. In another implementation, the application launch button 202 is a virtual button visually depicted on the display device 210.

In response to a trigger of the application launch button 202 (e.g., a when a user presses or actuates the application launch button), the processor 304 identifies the active connections of the electronic device 102. At any given time the electronic device 102 may have zero, one, two, or more active connections. For example, the processor 304 may determine which zero or more connection interfaces of the electronic device 102 are being actively used by the electronic device to couple the electronic device 102 with other devices or programs. The processor 304 may select one or more of the available applications 322, 324, and 326 for activation in response to the trigger of the application launch button 202. The processor 304 may activate different applications when the electronic device 102 has different active connections. For example, the processor 304 may select and activate the application 322 when a first connection interface of the electronic device is active when the application launch button 202 is triggered. When a second connection interface of the electronic device is active when the application launch button 202 is triggered, the processor 304 may select and activate a different application, such as the application 324.

The connection status based application launch system of Figure 3 illustrates more detail of the connection status based application launch system of Figure 1. For example, the components shown in Figure 3 may perform the functions of the connection status determination unit 104 and the application selection unit 106 of Figure 1. Specifically, the processor 304, the connection interface 312, and the connection monitor program 320 of Figure 3 may collectively serve as the connection status determination unit 104 of Figure 1, while the processor 304 and the application selection program 318 of Figure 3 may collectively serve as the application selection unit 106 of Figure 1.

The processor 304 may execute a number of different programs or applications during the connection status based application selection process. In one implementation, the processor 304 executes the button monitor program 316 to detect when the application launch button 202 is triggered. In response to a detected trigger of the application launch button 202, the processor 304 may activate (e.g., launch) the application selection program 318 before launching the user's desired application. In this manner, the application selection program 318 may serve as an intermediary between the button press and the user's desired application.

After the application selection program 318 is activated, the system determines the status of the available connection interfaces of the electronic device when the application launch button 202 was triggered. In one implementation, the connection monitor program 320 monitors the connection interface 312 and one or more additional connection interfaces of the device to determine the connection status of the device. The determined connection status may indicate that zero external connections are active, one external connection is active, two external connections are active, or more than two external connections are active.

The connection monitor program 320 may interpret connection status data received from the connection interface 312 and other connection interfaces to identify which connection interfaces are active. The connection monitor program 320 may output an indication of the active connections to the application selection program 318. In one implementation, the connection monitor program 320 outputs a binary representation of a number that corresponds to the connection state of the device. For example, the connection monitor program 320 may output the number 0 when no connection interfaces are active, the number 1 when a first designated connection interface (e.g., Wi-Fi, etc.) is active, the number 2 when a second designated connection interface (e.g., Bluetooth, etc.) is active, the number 3 when a third designated connection interface (e.g., headphone, etc.) is active, and other numbers to indicate other connections states. In another implementation, the connection monitor program 320 outputs the name of the one or more active connection interfaces. The application selection program 318 uses the received connection status information to cause the processor 304 to activate a predetermined application of the plurality of applications 322, 324, and 326. For example, if the output from the connection monitor program 320 indicates that the device has an active Wi-Fi connection, then the application selection program 318 accesses a collection of predetermined links between connection states and applications, and causes the processor 304 to activate the application linked with the Wi-Fi connection that is active.

The collection of predetermined links accessible by the application selection program 318 may include a first predetermined link between a first connection type and a first application 322, and a second predetermined link between a second connection type and a second application 324. The links may be default system links or may be established by the user. The application selection program 318 may cause the processor 304 to activate the first application 322 based on the first predetermined link when the first connection type is active when the application launch button 202 is triggered. Similarly, the application selection program 318 may cause the processor 304 to activate the second application 324 based on the second predetermined link when the second connection type is active and the application launch button 202 is triggered.

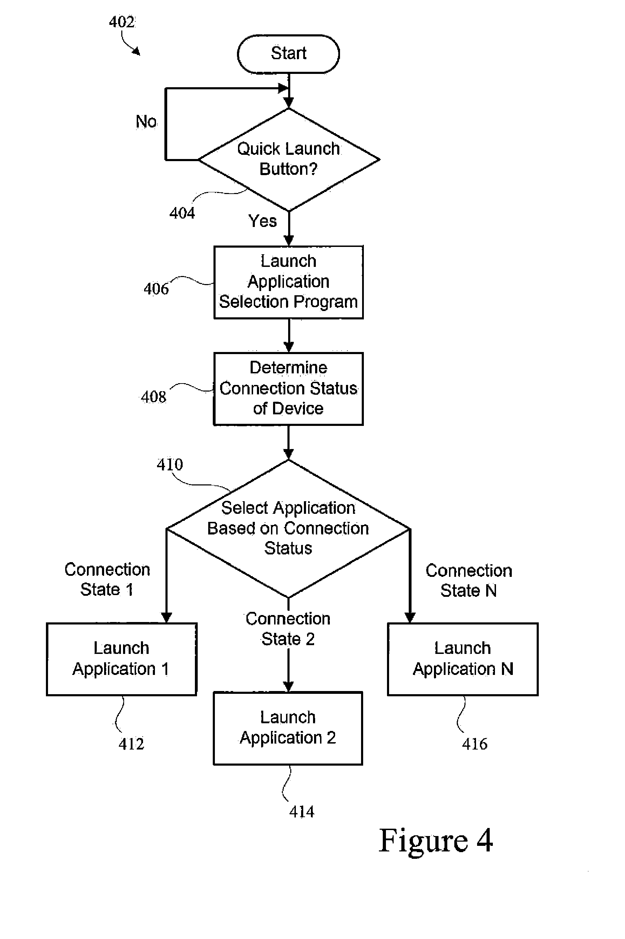

Figure 4 illustrates a connection status based application launch method 402. The method 402 may start by monitoring user input signals at act 404 to determine whether the user triggered the application launch input element of the electronic device. If the user has not triggered the application launch input element, then the method 402 may wait for the application launch input element to be triggered. Once the user triggers the application launch input element, such as by pressing the quick launch button of the electronic device or the occurrence of an event, the method proceeds to act 406. At act 406, the application selection program is launched.

At act 408, the application selection program determines the connection state of the electronic device. For example, the application selection program may obtain data from one or more connection interfaces of the electronic device to determine which connection interfaces, if any, are active. In one implementation, the connection state indicates which types of connection interfaces are active. In another implementation, the connection state indicates the names of specific connections within one type of connection interface.

At act 410, an application is selected from the multiple available applications based on the determined connection state of the electronic device. To select the appropriate application based on the connection state of the device, the application selection program may access a collection of one or more default or user-defined links between specific applications and corresponding connection states.

If the application selection program determines that the electronic device is in a first active connection state, then the first application that is linked with the first active connection state is launched at act 412. If the application selection program determines that the electronic device is in a second active connection state, then the second application that is linked with the second active connection state is launched at act 414. If the application selection program determines the electronic device is in an Nth (e.g., third, fourth, fifth, sixth, etc.) active connection state, then the Nth application that is linked with the Nth active connection state is launched at act 416.

At act 410, an application is selected from multiple available applications. The selection may be based on a lack of any active connections, may be based on a single active connection, or may be based on multiple active connections. For example, the electronic device may be in the first active connection state (which leads to the launch of the first application at act 412) when none of the connection interfaces of the electronic device are active. The electronic device may be in the second active connection state (which leads to the launch of the second application at act 414) when a first connection interface of the electronic device is active. As another example, the electronic device may be in the Nth active connection state (which leads to the launch of the Nth application at act 416) when a second connection interface of the electronic device is active.

The method may distinguish between active connection states at acts 408 and 410 by identifying one primary active connection interface. For example, when both a headphone connection and a Wi-Fi connection are active, the method may identify one of the connections as the primary active connection interface and launch the corresponding application in response to a trigger of the application launch input element of the electronic device. Alternatively, the method may distinguish between active connection states at act 410 by identifying multiple active connection interfaces. For example, in one implementation, the electronic device may be in the first active connection state when both a first connection interface (e.g., headphones) and a second connection interface (e.g., Wi-Fi) are active, but may be in the second active connection state when the first connection interface (e.g., headphones) is active and the second connection interface (e.g., Wi-Fi) is not active. In this implementation, the method could launch a different application in response to the trigger of the application launch input element based on a group of active connections. In the example above, the method may launch an Internet based streaming music service when both the headphones and Wi-Fi connections are active, but may launch a local media application when the headphones are active but the Wi-Fi connection is not.

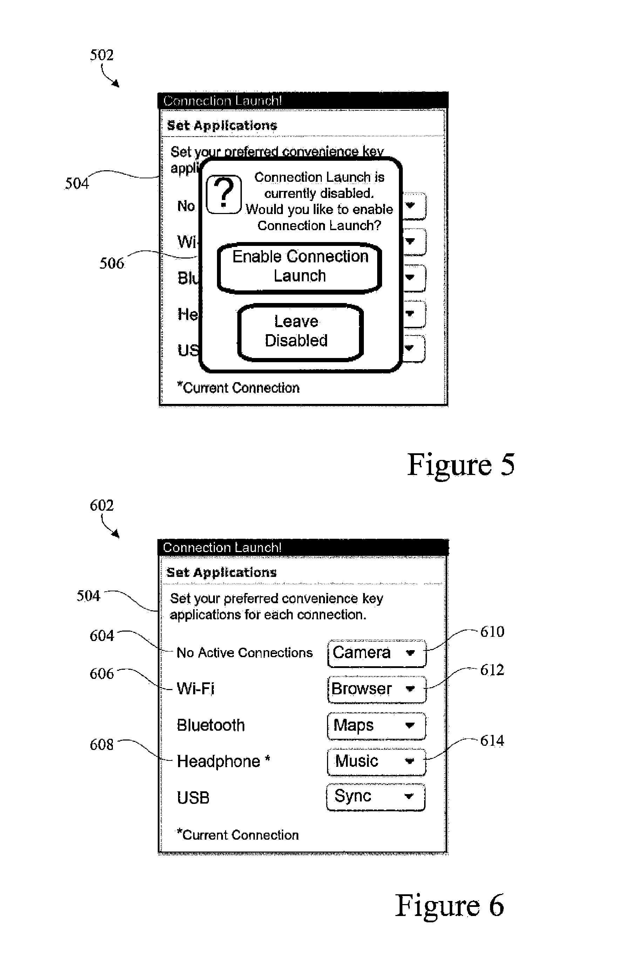

Figure 5 illustrates a user interface 502 for a connection status based application launch system. The user interface 502 may be displayed on a display area of the electronic device in response to the user requesting access to the system settings. The user interface 502 includes an application launch settings input element 504 and an enablement element 506. The application launch settings input element 504 is shown in the background behind the enablement element 506 in the view of Figure 5. For example, the enablement element 506 may be a pop-up window displayed on top of the application launch settings input element 504. The application launch settings input element 504 will be described below in more detail below in connection with Figure 6. In one implementation, the enablement element 506 is displayed with the content shown in Figure 5 when the system settings data is requested by the user and the system is currently disabled. In this mode, the enablement element 506 provides the user with the ability to enable the connection status based application launch system or leave the system disabled. In another implementation, the enablement element 506 is displayed with different content when the system settings data is requested by the user and the connection status based application launch system is already enabled. In this mode, the enablement element 506 provides the user with the ability to disable the connection status based application launch system or leave the system enabled.

The enablement element 506 allows the user to switch the system between an active state and a non-active state. The system enables connection status based application activation while the enablement element 506 is in the active state. The system also disables connection status based application activation while the enablement element 506 is in the non-active state. Because the user may switch between states (e.g., an active state and a non-active state, for example), the user can control when the system considers connection status information before launching an application in response to a trigger of the application selection input element. If the user switches the system into the non-active state, then the system may launch an associated application without considering the status of the connection interfaces of the device.

Figure 6 illustrates a user interface 602 for a connection status based application launch system. The user interface 602 may be rendered by a processor on a display area of the electronic device in response to the user requesting access to the system settings. The user interface 602 may include the application launch settings input element 504. In one implementation, the application launch settings input element 504 is fully visible to the user in the user interface 602 after the user selects the active or non-active status on the enablement element 506 shown in front of the application launch settings input element 504 in Figure 5.

The application launch settings input element 504 includes one or more connection state designations 604, 606, and 608, and one or more user input fields 610, 612, and 614. The user input fields allow a user to choose specific applications to be associated with specific connection state designations. The user input fields 610, 612, and 614 are shown as drop down menus in the implementation of Figure 6, although other input elements may be used, such as text entry boxes or file selection "browse" buttons. The drop down menus may provide a list of all applications available to be linked with a listed connection state. In one implementation, the number of connection state designations displayed in the application launch settings input element 504 is equal to the number of user input fields. For example, for each of the connection state designations, such as the connection state designations 604, 606, and 608, there is a corresponding input field, such as the input fields 610, 612, and 614.

The application launch settings input element 504 of the user interface 602 allows creation of links between connection states and applications. As one example, the user may select a camera application to be associated with a "no active connections" state by selecting the camera application from the input field 610. This association creates a link stored in computer memory between the "no active connections" state and the camera application. The system may later access this link to know to launch the camera application when the quick launch button is pressed while the device is in the "no active connections" state. As another example, the user may select an Internet browser application to be associated with an "active Wi-Fi" state by selecting the Internet browser application from the pull down menu 612. This association creates a link stored in computer memory between the "active Wi-Fi" state and the browser application. The system may later access this link to know to launch the browser application when the quick launch button is pressed while the device is in the "active Wi-Fi" state. As yet another example, the user may select a music or media application to be associated with an "active headphone" state by selecting the music or media application from the pull down menu 614. This association creates a link stored in computer memory between the "active headphone" state and the music or media application. The system may later access this link to know to launch the music or media application when the quick launch button is pressed while the device is in the "active headphone" state.

The implementation of the user interface 602 in Figure 6 shows a different application associated with each of the possible device connection states. In other implementations, the same application may be associated with multiple device connection states. For example, the user may select to pair the camera application with one device connection state while pairing the messaging application with the remainder of the possible device connection states.

The application launch settings input element 504 of the user interface 602 may also include an indication of a current connection state of the electronic device while the user interface 602 is displayed in the display area of the electronic device. In the implementation of Figure 6, the user interface 602 displays a star (*) next to the connection state that is identified as the current connection state of the electronic device. For example, the star is next to the "headphone" state name, which indicates that the device is currently in the "active headphone" state. If the connection state of the electronic device is changed while the user interface 602 is displayed so that the device is in the "active Wi-Fi" state, then the user interface 602 would move the star to be located next to the "Wi-Fi" state name. The current connection state indicator helps the user know which connection state name corresponds to the current connection state while the user is selecting which application to pair with which connection state.

In some implementations, the system launches different applications based on the status of different types of connection interfaces. The user interface 602 in the implementation of Figure 6 allows a user to assign applications to various different connection types so that the system can distinguish between different connection types (e.g., Wi-Fi v. Bluetooth, or Wi-Fi v. Headphone). For example, the user may assign a first application to an "active Wi-Fi" state, a second application to an "active Bluetooth" state, a third application to an "active headphone" state, and other applications to other connection states. In this implementation, at act 410 of Figure 4, the system may select an application to launch in response to a trigger of an application launch input element based on which connection type is selected as the primary active connection type. In one implementation, the primary active connection type may be the connection interface that is being used most significantly (e.g., based on amount of data transferred over each interface or the amount of processor time devoted to each interface). In another implementation, the primary active connection type may be determined based on a predetermined hierarchy providing relative priority to the various connection types. For example, the predetermined hierarchy may establish that the Wi-Fi interface will be deemed the primary active connection when it is active regardless of whether other connection interfaces are also active. Other connection interfaces may then be ordered beneath the top connection interface type to establish the hierarchy.

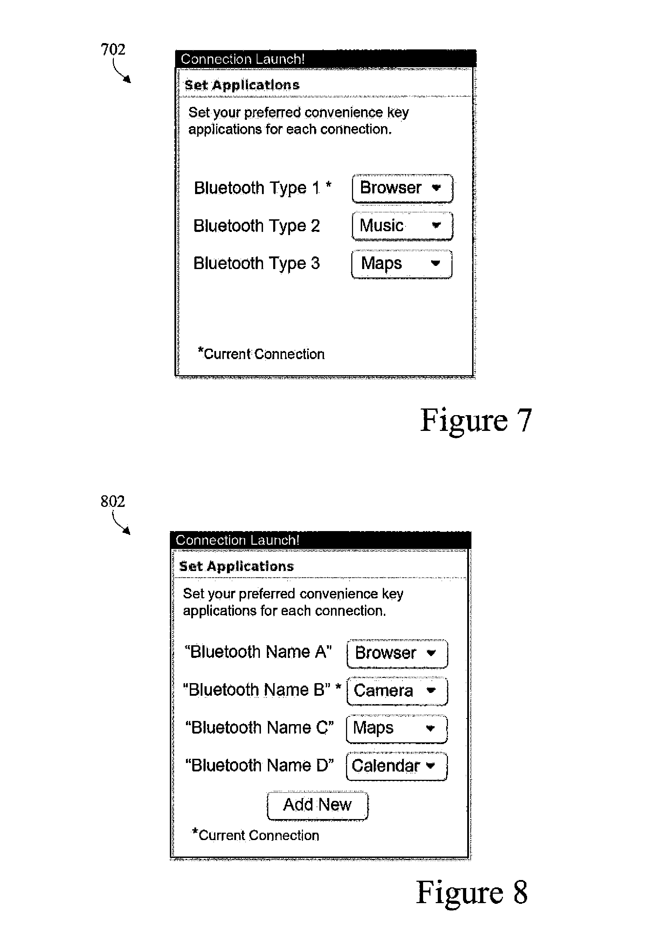

In other implementations, the system launches different applications based on details of a single type of connection interface. For example, the user interfaces 702, 802, 902, 1002, and 1102 of Figures 7-11 allow a user to assign applications to specific connections within one type of connection interface so that the system can distinguish between different sub-status connection types (e.g., home Wi-Fi v. work Wi-Fi, or car stereo Bluetooth v. laptop computer Bluetooth). In this implementation, the system (such as the connection status determination unit) may determine whether the connection interface in question is coupled with a first external device (e.g., a first Wi-Fi network device, Bluetooth network device, headphone device, or USB device) or a second external device (e.g., a second Wi-Fi network device, Bluetooth network device, headphone device, or USB device) in response to the trigger of the application launch input element of the electronic device. When the connection interface is determined to be coupled with the first external device when the trigger occurs, the system may launch a first application that has a pre-determined link with the connection state associated with an active connection with the first external device. When the connection interface is determined to be coupled with the second external device when the trigger occurs, the system may launch a second application that has a pre-determined link with the connection state associated with an active connection with the second external device.

In the implementation of Figure 7, the user interface 702 allows a user to assign different applications to different Bluetooth connection types. For example, the user may assign a first application to a first Bluetooth type (e.g., a file transfer type), a second application to a second Bluetooth type (e.g., an audio connection type), and other applications to other Bluetooth connection types. In this implementation, at act 408 of Figure 4, the system may receive data that indicates the type of the Bluetooth connection that is being used. At act 410 of Figure 4, the system in this implementation may select an application to launch in response to a trigger of an application launch input element based on the type (e.g., file transfer type or audio streaming type) of the Bluetooth connection that is active.

In the implementation of Figure 8, the user interface 802 allows a user to assign different applications to different Bluetooth connection names. For example, the user may assign a first application to a first Bluetooth name (e.g., "laptop computer" name), a second application to a second Bluetooth name (e.g., "car stereo" name), and other applications to other Bluetooth connection names. In this implementation, at act 408 of Figure 4, the system may receive data that indicates the name of the Bluetooth connection that is being used. At act 410 of Figure 4, the system in this implementation may select an application to launch in response to a trigger of an application launch input element based on the name (e.g., "laptop computer" name or "car stereo" name) of the Bluetooth connection that is active.

The user interface 802 also includes an input element, such as an "add new" button, that allows the user to define additional Bluetooth names so that additional application pairings between Bluetooth names and applications may be established. Other user interfaces, such as the interfaces 602, 702, 902, 1002, and 1102, may also be designed with a similar input element to create additional pairings between applications and connection states.

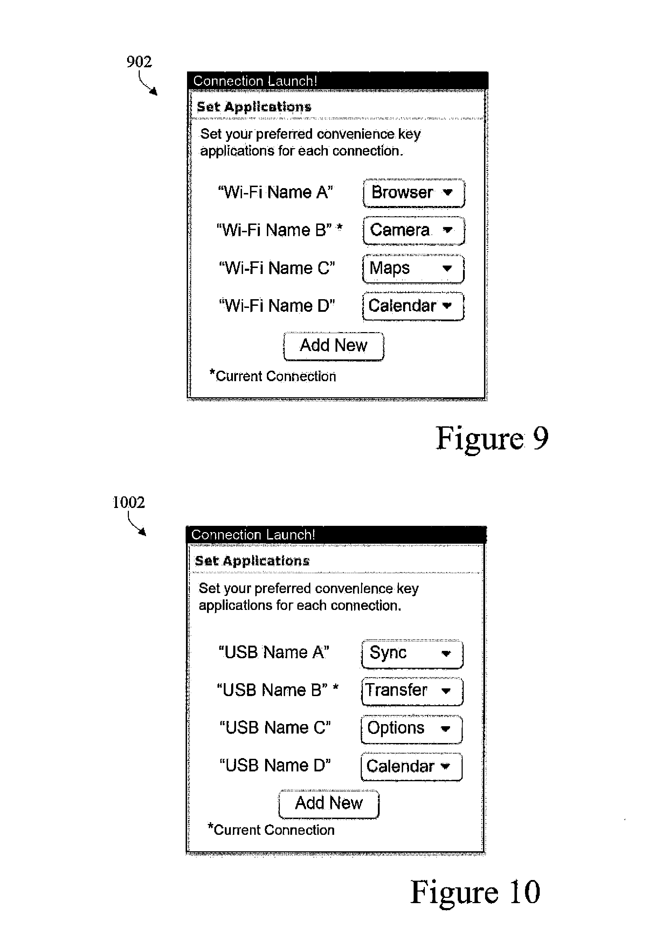

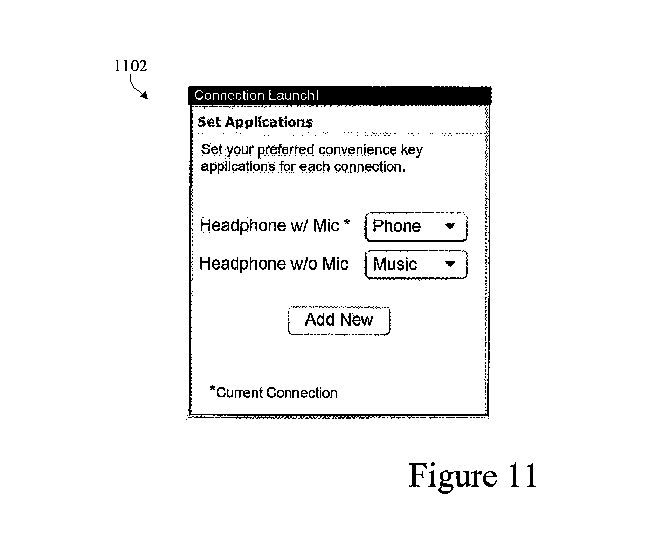

In the implementation of Figure 9, the user interface 902 allows a user to assign different applications to different Wi-Fi connection names in a manner similar to the other user interfaces described above. Therefore, the system may distinguish between a home Wi-Fi and a work Wi-Fi (or any other different Wi-Fi connections) and launch different applications accordingly. In the implementation of Figure 10, the user interface 1002 allows a user to assign different applications to different USB connection names in a manner similar to the other user interfaces described above. Therefore, the system may distinguish between different types of USB connections and launch different applications accordingly. In the implementation of Figure 11, the user interface 1102 allows a user to assign different applications to different headphone types in a manner similar to the other user interfaces described above. Therefore, the system may distinguish between a set of headphones that includes a microphone and a set of headphones that does not include a microphone (or any other different headphone types) and launch different applications accordingly.

Each of the processes described herein may be encoded in a computer-readable storage medium (e.g., a computer memory), programmed within a device (e.g., one or more circuits or processors), or may be processed by a controller or a computer. If the processes are performed by software, the software may reside in a local or distributed memory resident to or interfaced to a storage device, a communication interface, or non-volatile or volatile memory in communication with a transmitter. The memory may include an ordered listing of executable instructions for implementing logic. Logic or any system element described may be implemented through optic circuitry, digital circuitry, through source code, through analog circuitry, or through an analog source, such as through an electrical, audio, or video signal. The software may be embodied in any computer-readable or signal-bearing medium, for use by, or in connection with an instruction executable system, apparatus, or device. Such a system may include a computer-based system, a processor-containing system, or another system that may selectively fetch instructions from an instruction executable system, apparatus, or device that may also execute instructions.

A "computer-readable storage medium," "machine-readable medium," "propagated-signal" medium, and/or "signal-bearing medium" may comprise a medium (e.g., a non-transitory medium) that stores, communicates, propagates, or transports software or data for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection having one or more wires, a portable magnetic or optical disk, a volatile memory, such as a Random Access Memory (RAM), a Read-Only Memory (ROM), an Erasable Programmable Read-Only Memory (EPROM or Flash memory), or an optical fiber. A machine-readable medium may also include a tangible medium, as the software may be electronically stored as an image or in another format (e.g., through an optical scan), then compiled, and/or interpreted or otherwise processed. The processed medium may then be stored in a computer and/or machine memory.

While various embodiments of the present system have been described, it will be apparent to those of ordinary skill in the art that many more embodiments and implementations are possible within the scope of the disclosure. Accordingly, the disclosure is not to be restricted except in light of the attached claims and their equivalents.

## Claims

1. An electronic device (102), comprising:
a connection status determination processor (104) configured to determine a status of one or more connection interfaces (204, 206, 208) of the electronic device in response to a trigger of an application launch input element (202) of the electronic device; and
an application selection processor (106) configured to activate a different application when the connection status determination processor determines that the one or more connection interfaces reflect a first active connection state for the electronic device when the application launch input element is triggered than when the connection status determination processor determines that the one or more connection interfaces reflect a second active connection state for the electronic device when the application launch input element is triggered.

2. The electronic device of claim 1, where the one or more connection interfaces comprise a first connection interface and a second connection interface;
where the connection status determination processor is configured to select the first connection interface, the second connection interface, or another of the one or more connection interfaces as a primary active connection interface of the electronic device in response to the trigger of the application launch input element;
where the application selection processor is configured to activate a first application when the connection status determination processor selects the first connection interface as the primary active connection interface; and
where the application selection processor is configured to activate a second application, different than the first application, when the connection status determination processor selects the second connection interface as the primary active connection interface.

3. The electronic device of claim 2, where the first connection interface comprises a wireless data transfer interface (204) and the second connection interface comprises a physical connection port (206, 208) configured to mechanically couple the electronic device with another device.

4. The electronic device of claim 2, where the first connection interface comprises a wireless data transfer interface (204) and the second connection interface comprises a headphone jack (206).

5. The electronic device of claim 2, where the first connection interface comprises a wireless data transfer interface (204) and the second connection interface comprises a Universal Serial Bus port (208).

6. The electronic device of claim 2, where the first connection interface comprises a Wi-Fi interface and the second connection interface comprises a Bluetooth interface.

7. The electronic device of claim 1, where the one or more connection interfaces comprise a first connection interface;
where the connection status determination processor is configured to determine whether the first connection interface is coupled with a first external device or a second external device in response to the trigger of the application launch input element;
where the application selection processor is configured to activate a first application when the connection status determination processor determines that the first connection interface is coupled with the first external device; and
where the application selection processor is configured to activate a second application, different than the first application, when the connection status determination processor determines that the first connection interface is coupled with the second external device.

8. The electronic device of claim 7, where the first connection interface comprises a Wi-Fi interface (204) of the electronic device; and
where the first external device comprises a first Wi-Fi network access device and the second external device comprises a second Wi-Fi network access device.

9. The electronic device of claim 7, where the first connection interface comprises a Bluetooth interface (204) of the electronic device; and
where the first external device comprises a first Bluetooth network device and the second external device comprises a second Bluetooth network device.

10. The electronic device of claim 7, where the first connection interface comprises a headphone jack (206) of the electronic device; and
where the first external device comprises a first type of headphone device and the second external device comprises a second type of headphone device.

11. The electronic device of claim 1, where the first active connection state results from the connection status determination processor determining that none of the one or more connection interfaces are active, and where the second active connection state results from the connection status determination processor determining that one or more of the one or more connection interfaces are active.

12. The electronic device of claim 1, where the application selection processor comprises a first predetermined link between the first active connection state and a first application;
where the application selection processor is configured to activate the first application based on the first predetermined link when the electronic device is in the first active connection state when the application launch input element is triggered;
where the application selection processor comprises a second predetermined link between the second active connection state and a second application; and
where the application selection processor is configured to activate the second application based on the second predetermined link when the electronic device is in the second active connection state when the application launch input element is triggered.

13. The electronic device of claim 1, where the application selection processor is configured to render a user interface (502, 602, 702, 802, 902, 1002, 1102) on a display device (210) of the electronic device in response to a user input request for the user interface, and where the user interface comprises a user input field (610, 612, 614) that allows creation of a link between an active connection state for the electronic device and an application to be launched when the application launch input element is triggered in that active connection state.

14. The electronic device of claim 13, where the application selection processor is configured to display an indication of a current active connection state of the electronic device while the user interface is displayed on the display device.

15. A method, comprising:
detecting a trigger of an application launch input element (202) of an electronic device (102);
determining a status of one or more connection interfaces (204, 206, 208) of the electronic device in response to the trigger of the application launch input element; and
activating, by a processor (106, 304), a different application when the one or more connection interfaces reflect a first active connection state for the electronic device when the application launch input element is triggered than when the one or more connection interfaces reflect a second active connection state for the electronic device when the application launch input element is triggered.

## Amended claims

### Amended claims in accordance with Rule 137(2) EPC.

**1.** An electronic device (102), **characterized by**:
a connection status determination processor (104) configured to determine a status of one or more connection interfaces (204, 206, 208) of the electronic device in response to a trigger of an application launch input element (202) of the electronic device; and
an application selection processor (106) configured to activate a different application when the connection status determination processor determines that the one or more connection interfaces reflect a first active connection state for the electronic device when the application launch input element is triggered than when the connection status determination processor determines that the one or more connection interfaces reflect a second active connection state for the electronic device when the application launch input element is triggered.

**2.** The electronic device of claim 1, where the one or more connection interfaces comprise a first connection interface and a second connection interface;
where the connection status determination processor is configured to select the first connection interface, the second connection interface, or another of the one or more connection interfaces as a primary active connection interface of the electronic device in response to the trigger of the application launch input element;
where the application selection processor is configured to activate a first application when the connection status determination processor selects the first connection interface as the primary active connection interface; and
where the application selection processor is configured to activate a second application, different than the first application, when the connection status determination processor selects the second connection interface as the primary active connection interface.

**3.** The electronic device of claim 2, where the first connection interface comprises a wireless data transfer interface (204) and the second connection interface comprises a physical connection port (206, 208) configured to mechanically couple the electronic device with another device.

**4.** The electronic device of claim 2, where the first connection interface comprises a wireless data transfer interface (204) and the second connection interface comprises a headphone jack (206).

**5.** The electronic device of claim 2, where the first connection interface comprises a wireless data transfer interface (204) and the second connection interface comprises a Universal Serial Bus port (208).

**6.** The electronic device of claim 1, where the one or more connection interfaces comprise a first connection interface;
where the connection status determination processor is configured to determine whether the first connection interface is coupled with a first external device or a second external device in response to the trigger of the application launch input element;
where the application selection processor is configured to activate a first application when the connection status determination processor determines that the first connection interface is coupled with the first external device; and
where the application selection processor is configured to activate a second application, different than the first application, when the connection status determination processor determines that the first connection interface is coupled with the second external device.

**7.** The electronic device of claim 7, where the first connection interface comprises a Wi-Fi interface (204) of the electronic device; and
where the first external device comprises a first Wi-Fi network access device and the second external device comprises a second Wi-Fi network access device.

**8.** The electronic device of claim 7, where the first connection interface comprises a Bluetooth interface (204) of the electronic device; and
where the first external device comprises a first Bluetooth network device and the second external device comprises a second Bluetooth network device.

**9.** The electronic device of claim 7, where the first connection interface comprises a headphone jack (206) of the electronic device; and
where the first external device comprises a first type of headphone device and the second external device comprises a second type of headphone device.

**10.** The electronic device of claim 1, where the first active connection state results from the connection status determination processor determining that none of the one or more connection interfaces are active, and where the second active connection state results from the connection status determination processor determining that one or more of the one or more connection interfaces are active.

**11.** The electronic device of claim 1, where the application selection processor comprises a first predetermined link between the first active connection state and a first application;
where the application selection processor is configured to activate the first application based on the first predetermined link when the electronic device is in the first active connection state when the application launch input element is triggered;
where the application selection processor comprises a second predetermined link between the second active connection state and a second application; and
where the application selection processor is configured to activate the second application based on the second predetermined link when the electronic device is in the second active connection state when the application launch input element is triggered.

**12.** The electronic device of claim 1, where the application selection processor is configured to render a user interface (502, 602, 702, 802, 902, 1002, 1102) on a display device (210) of the electronic device in response to a user input request for the user interface, and where the user interface comprises a user input field (610, 612, 614) that allows creation of a link between an active connection state for the electronic device and an application to be launched when the application launch input element is triggered in that active connection state.

**13.** The electronic device of claim 13, where the application selection processor is configured to display an indication of a current active connection state of the electronic device while the user interface is displayed on the display device.

**14.** A method, comprising:
detecting a trigger of an application launch input element (202) of an electronic device (102);
**characterized by**:
determining a status of one or more connection interfaces (204, 206, 208) of the electronic device in response to the trigger of the application launch input element; and
activating, by a processor (106, 304), a different application when the one or more connection interfaces reflect a first active connection state for the electronic device when the application launch input element is triggered than when the one or more connection interfaces reflect a second active connection state for the electronic device when the application launch input element is triggered.

**15.** The electronic device of claim 1, where the application selection processor is configured to launch an application selection program (318) in response to the trigger of the application launch input element before launching a user's desired application (322, 324, 326), where the application selection program serves as an intermediary between the trigger of the application launch input element and the user's desired application, and where the application selection program is configured to cause the application selection processor to activate a predetermined application as the user's desired application based on connection status information.
